# EUROPÄISCHE PATENTSCHRIFT

(11) **EP 1 867 577 B1**
(45) Veröffentlichungstag und Bekanntmachung des Hinweises auf die Patenterteilung: **19.05.2010**
(21) Anmeldenummer: 07108846.2
(22) Anmeldetag: 24.05.2007
(51) Int. Cl.: B65D 61/00, B65D 85/20, B65G 1/04

(54) **Transport- und Lagergestell**
Transport and storage frame
Structure de transport et de stockage

(30) Priorität: 13.06.2006 DE 102006027361
(43) Veröffentlichungstag der Anmeldung: 19.12.2007
(73) Patentinhaber: SCHÜCO International KG, 33609 Bielefeld (DE)
(72) Erfinder: Ewering, Christian, 33104 Paderborn (DE); Götz, Olaf, 33609 Bielefeld (DE); Hanke, Carsten, 33613 Bielefeld (DE); Höcker, Eitel-Friedrich, 33739 Bielefeld (DE)
(74) Vertreter: Dantz, Jan Henning

(56) Entgegenhaltungen:
- DE-A1- 19 923 328
- DE-U1- 9 205 631
- DE-U1- 29 818 441
- FR-A1- 2 738 219
- US-A- 2 181 356

## Beschreibung

Die vorliegende Erfindung betrifft ein Transport- und Lagergestell, insbesondere Langgutpalette, mit mindestens zwei U-förmigen Trägern, die über Profilelemente miteinander verbunden und durch diese beabstandet gehalten sind.

Aus der DE 199 23 328 ist eine Vorrichtung zur Aufnahme von Stückgut bekannt, bei der U-förmige Bügel vorgesehen sind, die über Hohlprofile voneinander beabstandet gehalten sind. In den Hohlprofilen kann ein metallischer Bolzen als Spannelement eingesteckt werden. Eine solche Vorrichtung besitzt zwar eine gewisse Stabilität, allerdings ist die Montage sehr aufwendig. Zudem sind die in Längsrichtung verlaufenden Hohlprofile leicht durchzubiegen.

Die DE 92 05 631 offenbart ein Transportgestell für Langgut, bei dem mehrere vertikale Profile an Querprofilen hervorstehen. Die vertikalen Profile sind im oberen Bereich über ein Firstprofil und im unteren Bereich über weitere Profilabschnitte verbunden, die sich in Längsrichtung des Transportgestells erstrecken. Ferner ist zur Verstärkung zwischen zwei vertikalen Profilen jeweils eine Diagonalstrebe montiert.

Zudem offenbart die FR 2 738 219 ein Rahmengestell zur Aufnahme langer Gegenstände, bei dem zwei U-förmige Träger über in der Länge verstellbare Abstandshalter miteinander verbunden sind. Die Gegenstände werden auf die anhebbaren U-förmigen Träger abgelegt.

Es ist daher Aufgabe der vorliegenden Erfindung ein Transport- und Lagergestell zu schaffen, das leicht zu montieren ist und auch Biegelasten gut aufnehmen kann.

Diese Aufgabe wird mit einem Transport- und Lagergestell mit den Merkmalen des Anspruches 1 gelöst.

Erfindungsgemäß sind zwischen den Trägem Profilelemente angeordnet, die mindestens eine Längsstrebe und mindestens eine schräg zu der Längsstrebe angeordnete Verstärkungsstrebe aufweisen. Dadurch kann eine fachwerkartige Konstruktion erreicht werden, die durch die Verstärkungsstrebe vergleichsweise steif ist, wobei die Montage durch Einsatz von Profilelementen einfach gestaltet ist, da nur wenige Bauteile erforderlich sind. Dabei ist jeweils ein Profilelement zur Verbindung zweier Schenkel der U-förmigen Träger vorgesehen, so dass zwischen zwei Trägem an jeder Seite ein Profilelement angeordnet ist. Dadurch können die einstückig ausgebildeten Profilelemente schnell an den Trägem montiert werden, um ein Transport- und Lagergestell auszubilden.

Gemäß einer bevorzugten Ausgestaltung der Erfindung weist ein Profilelement zwei die U-förmigen Träger verbindenden Längsstreben auf, die über mindestens eine schräg zu der Längsstrebe angeordnete Verstärkungsstrebe miteinander verbunden sind. Alternativ ist es möglich, dass zwischen den zwei Längsstreben zwei sich einander kreuzende schräg angeordnete Verstärkungsstreben vorgesehen sind.

Wenn die Profilelemente als Formteile aus Kunststoff hergestellt sind, können sie besonders einfach montiert und kostengünstig hergestellt werden. Die Profilelemente können mit Längsstreben und/oder Verstärkungsstreben versehen sein, die im Querschnitt U-förmig ausgebildet sind, so dass sie sich einfach in Kunststoff durch ein Spritzgusswerkzeug fertigen lassen.

Für eine schnelle Montage können die Profilelemente auf der zu den Schenkeln der U-förmigen Träger gewandten Seite Kopplungselemente zur Festlegung aufweisen, die beispielsweise integral mit dem Profilelement ausgebildet sind.

Für eine stabile Abstützung der U-förmigen Träger können die Profilelemente Z- oder X-förmig ausgebildet sein. Ferner ist es vorteilhaft, wenn das Transport- und Lagergestell zu einer mittleren Längsebene symmetrisch ausgebildet ist, so dass sich das Transport- und Lagergestell nicht verzieht und krümmt. Für eine Erhöhung der Stabilität können die Profilelemente auch durch Metallprofile verstärkt sein.

Zur Verringerung der Durchbiegung des Transport- und Lagergestells ist es vorteilhaft, wenn die schräg angeordneten Verstärkungsstreben von einem mittleren Bereich zur Stirnseite des Transport- und Lagergestells hin abfallend ausgebildet sind. Denn gerade an den Stirnseiten könnte ein nach unten Durchbiegen auftreten, wenn das Transport- und Lagergestell mittig gehalten wird, so dass die Verstärkungsstreben besonders gut auftretende Zugkräfte aufnehmen können.

Die Erfindung wird nachfolgend anhand mehrerer Ausführungsbeispiele mit Bezug auf die beigefügten Zeichnungen näher erläutert. Es zeigen:

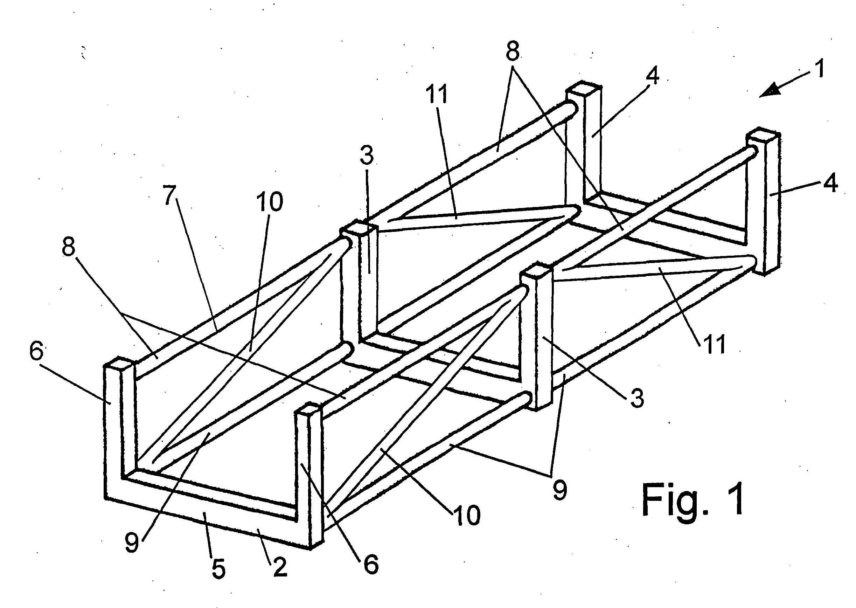

- Figur 1: Eine perspektivische Ansicht eines erfindungsgemäßen Transport- und Lagergestells;
- Figur 2: eine Seitenansicht des Transport- und Lagergestells ähnlich zu Figur 1 vor der Montage;
- Figur 3: ein modifiziertes Ausführungsbeispiel eines Transport- und Lagergestells, und
- Figur 4: eine perspektivische Ansicht eines weiteren Ausführungsbeispieles, das nicht Teil der Erfindung ist.

Ein Transport- und Lagergestell 1 umfasst voneinander beabstandet angeordnete U-förmige Träger 2, 3 und 4, die an ihren von einem bodenseitigen Balken 5 nach oben hervorstehenden Schenkeln 6 über Profilelemente 7 miteinander verbunden sind. Die Profilelemente 7 sind aus Kunststoff hergestellte Formteile, die eine obere Längsstrebe 8 und eine untere Längsstrebe 9 aufweisen, die über eine schräg verlaufende Verstärkungsstrebe 10 miteinander verbunden sind.

Das Transport- und Lagergestell 1 ist zu einer mittleren Längsebene und zu einer mittleren Querebene jeweils symetrisch ausgebildet, wobei die Profilelemente 7 jeweils eine Verstärkungsstrebe 10 bzw. 11 aufweisen, die sich von einem mittleren Bereich von der oberen Längsstrebe 8 zu der unteren Längsstrebe 9 hin abfallend erstreckt, was eine Durchbiegung des Transport- und Lagergestells 1 an den Stirnkanten reduziert.

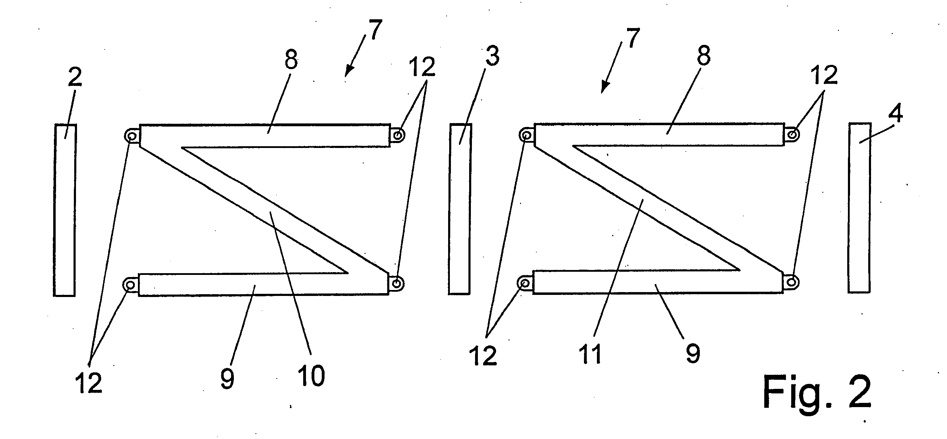

Zur Verbindung der Profilelemente mit den U-förmigen Trägem 2, 3, 4 weisen die Profilelemente 7 Kopplungselemente 12 auf, wie dies in Figur 2 zu erkennen ist. Die Profilelemente 7 sind einstückig aus Kunststoff hergestellt und weisen an der oberen Längsstrebe 8 sowie an der unteren Längsstrebe 9 an gegenüberliegenden Seiten jeweils Kopplungselemente 12 auf, die eine Öse ausbilden und in entsprechende Schlitze an den Schenkeln 6 der U-förmigen Träger 2, 3 und 4 einsteckbar sind. An den Kopplungselementen 12 können mechanische Befestigungselemente, wie Bolzen, Schrauben, Schnellspanneinrichtungen etc. festgelegt werden um eine dauerhafte stabile Verbindung zu gewährleisten. Die Profilelemente 7 sind in diesem Ausführungsbeispiel Z-förmig ausgebildet wobei die Verstärkungsstrebe 10 bzw. 11 wahlweise nach außen oder innen hin abfallen kann.

Die Profilelemente 7 sind im Querschnitt jeweils U-förmig ausgebildet, so dass sie im Spritzgussverfahren herstellbar sind. Ferner können metallische Verstärkungselemente an dem Profilelement 7 eingelegt sein.

An dem mittigen Träger 3 können über mechanische Befestigungsmittel bei Bedarf auch zwei Profilelemente 7 gleichzeitig über die Kopplungselemente 12 festgelegt werden.

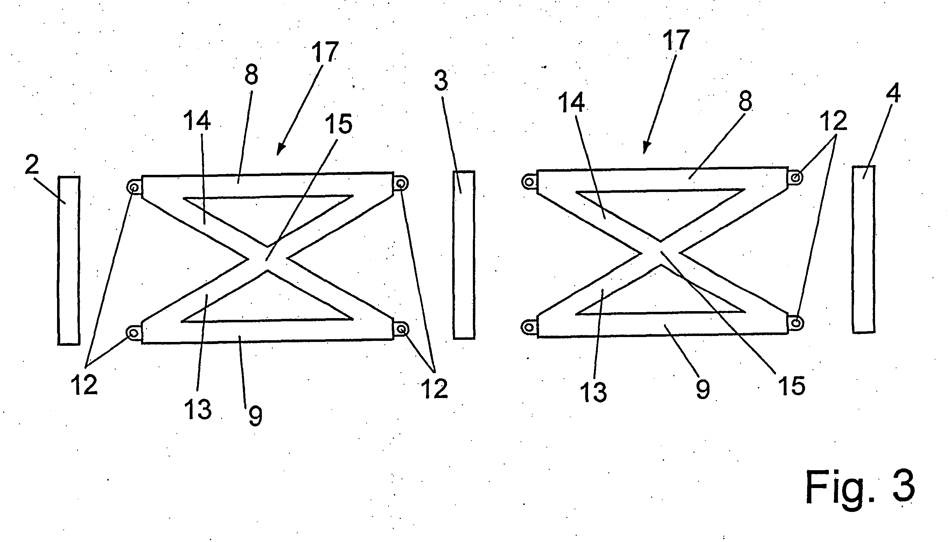

In Figur 3 ist eine modifizierte Ausführungsform gezeigt, bei der Profilelemente 17 zwischen den Trägem 2, 3 und 4 vorgesehen sind. Die Profilelemente 17 sind X-förmig ausgebildet und umfassen eine obere Längsstrebe 8 und eine untere Längsstrebe 9, die über zwei Verstärkungsstreben 13 und 14 miteinander verbunden sind und schräg gekreuzt ausgebildet sind, wobei ein Kreuzungspunkt 15 mittig angeordnet ist. Die Längsstreben 8 und 9 weisen an ihren Außenseiten jeweils Kopplungselemente 12 wie bei dem vorangegangenen Ausführungsbeispiel auf.

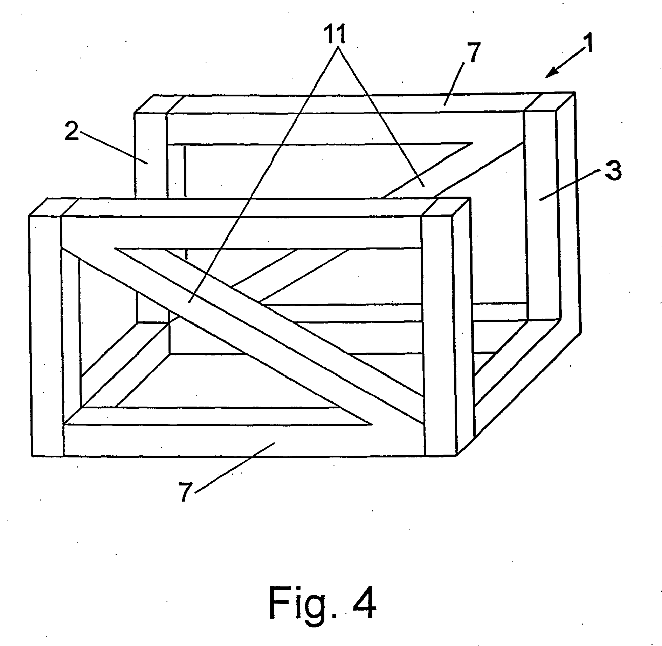

In Figur 4 ist ein fertiges Transport- und Lagergestell gezeigt, bei dem nur zwei U-förmige Träger 2 und 3 über Profilelemente 7 miteinander verbunden sind. Dieses Transport- und Lagergestell ist durch die Verwendung von zwei Trägem und zwei Profilelementen relativ kurz ausgebildet, kann aber bei Bedarf beliebig verlängert werden, so dass das Transport- und Lagergestell die gewünschte Länge erhalten kann, wobei die Profilelemente 7 jeweils eine Länge zwischen 1 m und 2 m aufweisen können.

Die Profilelemente 7 können selbst ebenfalls Querverstrebungen aufweisen, also im Wesentlichen U-förmig ausgebildet sein, aber eine Vielzahl von Verstärkungsstreben innerhalb des U-Profils aufweisen, um die Belastbarkeit bei geringem Materialeinsatz zu erhöhen. Zudem können extrudierte Profile zur Herstellung eines Profilelementes eingesetzt werden. Ferner können neben Kunststoffen auch andere Materialien, wie Metall und Verbundwerkstoffe bei der Herstellung eingesetzt werden.

An den Trägem 2, 3 und 4 können ferner Kopplungselemente vorhanden sein, um das Transport- und Lagergestell 1 über einen Kran oder Gabelstapler anheben zu können. Hierbei können entsprechende Haken, Ösen und Ausnehmungen ausgebildet sein. Ferner können Zentrierelemente vorgesehen sein, um mehrere Transport- und Lagergestelle auf einfache Weise stapeln zu können.

## Patentansprüche

1. Transport- und Lagergestell, insbesondere Langgutpalette, mit mindestens drei U-förmigen Trägem (2, 3, 4), die über Profilelemente (7, 17) miteinander verbunden und durch diese beabstandet gehalten sind, **dadurch gekennzeichnet, dass** die Profilelemente (7, 17) einstückig ausgebildet sind und mindestens eine die U-förmigen Träger (2, 3, 4), verbindende Längsstrebe (8, 9) und mindestens eine schräg zu der Längsstrebe (8, 9) angeordnete Verstärkungsstrebe (10, 11, 13, 14) aufweisen, wobei jeweils ein Profilelement (7, 17) zur Verbindung zweier Schenkel (6) der U-förmigen Träger (2, 3, 4) vorgesehen ist.

2. Transport- und Lagergestell nach Anspruch 1, **dadurch gekennzeichnet, dass** ein Profilelement (7, 17) zwei die U-förmigen Träger (2, 3, 4) verbindende Längsstreben (8, 9) aufweist, die über mindestens eine schräg zu der Längsstrebe (8, 9) angeordnete Verstärkungsstrebe (10, 11) miteinander verbunden sind.

3. Transport- und Lagergestell nach einem der Anspruch 1 oder 2, **dadurch gekennzeichnet, dass** ein Profilelement (7, 17) zwei die U-förmigen Träger (2, 3, 4) verbindende Längsstreben (8, 9) aufweist, die über zwei einander sich kreuzende schräg zu den Längsstreben (8, 9) angeordnete Verstärkungsstreben (13, 14) miteinander verbunden sind.

4. Transport- und Lagergestell nach einem der Ansprüche 1 bis 3, **dadurch gekennzeichnet, dass** die Profilelemente (7, 17) als Formteile aus Kunststoff hergestellt sind.

5. Transport- und Lagergestell nach einem der Ansprüche 1 bis 4, **dadurch gekennzeichnet, dass** die Profilelemente (7, 17) Längsstreben (8, 9) und/oder Verstärkungsstreben (10, 11, 13, 14) aufweisen, die im Querschnitt U-förmig ausgebildet sind.

6. Transport- und Lagergestell nach einem der Ansprüche 1 bis 5, **dadurch gekennzeichnet, dass** die Profilelemente (7, 17) auf der zu den Schenkeln (6) der U-förmigen Träger (2, 3, 4) gewandten Seite Kopplungselemente (12) zur Festlegung an den Schenkel (6) aufweist.

7. Transport- und Lagergestell nach einem der Ansprüche 1 bis 6, **dadurch gekennzeichnet, dass** die Profilelemente (7, 17) Z- oder X-förmig ausgebildet sind.

8. Transport- und Lagergestell nach einem der Ansprüche 1 bis 7, **dadurch gekennzeichnet, dass** das Transport- und Lagergestell zu einer mittleren Längsebene symetrisch ausgebildet ist.

9. Transport- und Lagergestell nach einem der Ansprüche 1 bis 8, **dadurch gekennzeichnet, dass** die Profilelemente (7, 17) Metallprofile zur Verstärkung aufweisen.

10. Transport- und Lagergestell nach einem der Ansprüche 1 bis 9, **dadurch gekennzeichnet, dass** die schräg angeordneten Verstärkungsstreben (10, 11, 13, 14) von einem mittleren seitlichen Bereich zur Stirnseite des Transport- und Lagergestells hin abfallend ausgebildet sind.

## Claims

1. Transport and storage rack, in particular a pallet for long articles, comprising at least three U-shaped carriers (2, 3, 4) which are connected to one another via profiled elements (7, 17) and are held spaced apart by these elements, **characterized in that** the profiled elements (7, 17) are formed in one piece and have at least one longitudinal strut (8, 9), which connects the U-shaped carriers (2, 3, 4), and at least one reinforcing strut (10, 11, 13, 14) arranged obliquely to the longitudinal strut (8, 9), wherein in each case one profiled element (7, 17) is provided for connecting two legs (6) of the U-shaped carriers (2, 3, 4).

2. Transport and storage rack according to Claim 1, **characterized in that** a profiled element (7, 17) has two longitudinal struts (8, 9) which connect the U-shaped carriers (2, 3, 4) and which are connected to one another by at least one reinforcing strut (10, 11) arranged obliquely to the longitudinal strut (8, 9).

3. Transport and storage rack according to either of Claims 1 and 2, **characterized in that** a profiled element (7, 17) has two longitudinal struts (8, 9) which connect the U-shaped carriers (2, 3, 4) and which are connected to one another via two reinforcing struts (13, 14) which are arranged crossing one another obliquely to the longitudinal struts (8, 9).

4. Transport and storage rack according to one of Claims 1 to 3, **characterized in that** the profiled elements (7, 17) are produced as shaped parts made of plastic.

5. Transport and storage rack according to one of Claims 1 to 4, **characterized in that** the profiled elements (7, 17) have longitudinal struts (8, 9) and/or reinforcing struts (10, 11, 13, 14) which are U-shaped in cross section.

6. Transport and storage rack according to one of Claims 1 to 5, **characterized in that**, on the side facing the legs (6) of the U-shaped carriers (2, 3, 4), the profiled elements (7, 17) have coupling elements (12) for fastening to the leg (6).

7. Transport and storage rack according to one of Claims 1 to 6, **characterized in that** the profiled elements (7, 17) are Z- or X-shaped.

8. Transport and storage rack according to one of Claims 1 to 7, **characterized in that** the transport and storage rack is formed symmetrically with respect to a central longitudinal plane.

9. Transport and storage rack according to one of Claims 1 to 8, **characterized in that** the profiled elements (7, 17) have metal profiles for reinforcement.

10. Transport and storage rack according to one of Claims 1 to 9, **characterized in that** the obliquely arranged reinforcing struts (10, 11, 13, 14) are designed so as to slope from a central lateral region towards the end side of the transport and storage rack.

## Revendications

1. Châssis de transport et de stockage, en particulier palette pour produit oblong, avec au moins trois supports (2, 3, 4) en forme de U qui sont reliés les uns aux autres par des éléments de profilé (7, 17) et sont maintenus à distance par ceux-ci, **caractérisé en ce que** les éléments de profilé (7, 17) sont réalisés d'un seul tenant et présentent au moins une entretoise longitudinale (8, 9) reliant les supports (2, 3, 4) en forme de U et au moins une entretoise de renforcement (10, 11, 13, 14) disposée en biais par rapport à l'entretoise longitudinale (8, 9), respectivement un élément de profilé (7, 17) étant prévu pour relier deux branches (6) des supports (2, 3, 4) en forme de U.

2. Châssis de transport et de stockage selon la revendication 1, **caractérisé en ce qu'**un élément de profilé (7, 17) présente deux entretoises longitudinales (8, 9) reliant les supports (2, 3, 4) en forme de U qui sont reliées entre elles par au moins une entretoise de renforcement (10, 11) disposée en biais par rapport à l'entretoise longitudinale (8, 9).

3. Châssis de transport et de stockage selon l'une quelconque des revendications 1 ou 2, **caractérisé en ce qu'**un élément de profilé (7, 17) présente deux entretoises longitudinales (8, 9) reliant les supports (2, 3, 4) en forme de U qui sont reliées entre elles par deux entretoises de renforcement (13, 14) disposées en biais par rapport aux entretoises longitudinales (8, 9), se croisant.

4. Châssis de transport et de stockage selon l'une quelconque des revendications 1 à 3, **caractérisé en ce que** les éléments de profilé (7, 17) sont fabriqués comme des pièces moulées en matière plastique.

5. Châssis de transport et de stockage selon l'une quelconque des revendications 1 à 4, **caractérisé en ce que** les éléments de profilé (7, 17) présentent des entretoises longitudinales (8, 9) et/ou des entretoises de renforcement (10, 11, 13, 14) qui sont réalisées en section en forme de U.

6. Châssis de transport et de stockage selon l'une quelconque des revendications 1 à 5, **caractérisé en ce que** les éléments de profilé (7, 17) présentent sur le côté tourné vers les branches (6) des supports (2, 3, 4) en forme de U des éléments d'accouplement (12) pour la fixation sur les branches (6).

7. Châssis de transport et de stockage selon l'une quelconque des revendications 1 à 6, **caractérisé en ce que** les éléments de profilé (7, 17) sont réalisés en forme de Z ou de X.

8. Châssis de transport et de stockage selon l'une quelconque des revendications 1 à 7, **caractérisé en ce que** le châssis de transport et de stockage est réalisé de manière symétrique à un plan médian longitudinal.

9. Châssis de transport et de stockage selon l'une quelconque des revendications 1 à 8, **caractérisé en ce que** les éléments de profilé (7, 17) présentent des profilés métalliques pour le renforcement.

10. Châssis de transport et de stockage selon l'une quelconque des revendications 1 à 9, **caractérisé en ce que** les entretoises de renforcement (10, 11, 13, 14) disposées en biais sont réalisées de manière inclinée d'une zone latérale médiane vers le côté avant du châssis de transport et de stockage.
